# EUROPÄISCHE PATENTSCHRIFT

(11) **EP 0 776 471 B1**
(45) Veröffentlichungstag und Bekanntmachung des Hinweises auf die Patenterteilung: **25.11.1998**
(21) Anmeldenummer: 95930451.0
(22) Anmeldetag: 14.08.1995
(51) Int. Cl.: G01N 1/06, B26D 7/06

(54) **MIKROTOM**
MICROTOME
MICROTOME

(30) Priorität: 15.08.1994 RU 94030222
(43) Veröffentlichungstag der Anmeldung: 04.06.1997
(73) Patentinhaber: MICROM LABORGERÄTE GmbH, 69190 Walldorf (DE)
(72) Erfinder: IZVOZTCHIKOV, Ilia, Petersburg, 194223 (RU); HEID, Hans, D-69245 Bammental (DE)
(74) Vertreter: Gnatzig, Klaus
(86) Internationale Anmeldenummer: EP9503219
(87) Internationale Veröffentlichungsnummer: WO9605495

(56) Entgegenhaltungen:
- EP-A- 0 051 052
- DE-A- 1 955 373
- US-A- 4 377 958
- US-A- 4 691 151
- US-A- 4 960 025

## Beschreibung

Die Erfindung betrifft ein Mikrotom zur Herstellung der für mikroskopische Untersuchungen bestimmten histologischen Schnitte, insbesondere von Pflanzen- und Tiergewebe.

Aus dem sowjetischen Erfinderschein SU-783626 oder aus der EP-A1 0 416 354 der Anmelderin sind sogenannte Schlittenmikrotome bekannt, die eine Grundplatte mit einem Objektträger und zusätzlich im wesentlichen waagerechte Führungen aufweisen. In den waagerechten Führungen ist ein mit einem Handgriff versehener Schneidmesserhalter bewegbar aufgenommen. Dabei ist die lineare, horizontal nach vorn und hinten verlaufende Bewegung des Schneidmesserhalters mit einem Vorschubantrieb des Objektträgers gekoppelt.

Schlittenmikrotome zeichnen sich durch. ihre einfache Konstruktion und einen daraus resultierenden niedrigen Preis aus. Außerdem zeichnen sie sich unter Voraussetzung einer hinreichenden Routine des Benutzers durch eine ermüdungsarme Bedienung aus. Nachteilig ist dagegen, daß die Abnahme der mikrotomischen Schnitte recht umständlich ist. Dieser Nachteil tritt besonders deutlich bei den neuesten Schlittenmikrotomen mit einem elektrischen Antrieb des Präparatvorschubes zutage, wie diese beispielsweise von der Anmelderin unter der Bezeichnung "HM 440" angeboten werden. Denn aufgrund des elektrischen Präparatvorschubes braucht der Schneidmesserhalter nicht mehr über die gesamte Länge der Führungsbahn bewegt zu werden, um den Präparatvorschub auszulösen. Es reicht vielmehr aus, das Schneidmesser bzw. den Schneidmesserhalter über eine Wegstrecke zu bewegen, die in etwa der Dicke des Präparates entlang der Schneidrichtung entspricht, da die Elektronik des Präparatvorschubes die Bewegungsumkehr des Schneidmesserhalters detektiert. Dadurch ist bei kleinen Präparaten eine wesentlich höhere Schnittfrequenz möglich. Es hat sich jedoch herausgestellt, daß die für die Schnittabnahme erforderliche Zeit die Schnittfrequenz begrenzt.

Aus der US-A-4 377 958 ist ein Mikrotom bekannt, das hinsichtlich der Bewegungsrichtung des Schneidmessers und der Zustellbewegung des Präparates einem Schlitten-Mikrotom weitgehend ähnelt. Die Schnittebene ist wie bei SchlittenMikrotomen üblich im wesentlichen horizontal ausgerichtet und die Schneidbewegung erfolgt durch eine Horizontalbewegung des Messerträgers. Der Antrieb der Schneidbewegung erfolgt manuell durch Betätigung eines Hydraulikkolbens und wird hydraulisch auf den Messerträger übertragen.

Desweiteren sind sogenannte Rotationsmikrotome bekannt, die beispielsweise in der DE-P 33 01 921 oder in der DE-C1 35 39 138 beschrieben sind. Ein solches Rotationsmikrotom weist üblicherweise eine Grundplatte auf, an der ein Schlitten mit einem Schneidmesser parallel zur Grundplatte beweglich aufgenommen ist. Der Schlitten mit dem Objektträger ist in einer weiteren Führung aufgenommen, die im wesentlichen senkrecht zur Grundplatte gerichtet ist und demzufolge eine Bewegung des Objektträgers senkrecht zur Grundplatte erlaubt. Der Antrieb der senkrecht zur Grundplatte verlaufenden Schneidbewegung des Objektträger erfolgt mittels einer Handkurbel in Form einer Scheibe mit einer horizontalen Drehachse.

Hinsichtlich der Schnittabnahme sind derartige Rotationsmikrotome wesentlich bedienungsfreundlicher als Schlittenmikrotome, da die erzeugten Schnitte im vorderen Bereich des Mikrotoms erzeugt werden und auf der nach vorn unten geneigten Rückenfläche des Mikrotommessers bzw. Messerhalters liegen und dort, beispielsweise durch ein Wasserbad, abgeschwemmt werden können. Nachteilig an solchen Rotationsmikrotomen ist jedoch, daß die Drehbewegung des Handgriffs recht ermüdend ist. Die im Laufe eines Arbeitstages erzeugte Schnittanzahl ist dadurch bei Rotationsmikrotomen niedriger als bei Schlittenmikrotomen.

Zur Beseitigung dieses Nachteils wäre es denkbar, für den Antrieb der Schneidbewegung einen Motor vorzusehen. Die dafür in Frage kommenden Motoren würden jedoch den Preis des Mikrotoms nahezu verdoppeln.

Ein derartiges entsprechend einem Rotationsmikrotom aufgebautes Mikrotom mit einem motorischen Antrieb der Schneidbewegung ist aus der EP-A1-0 051 052 bekannt. Bei dem dort beschriebenen Mikrotom erfolgt die Ankopplung des Schrittmotors für die Schneidbewegung an den Messerträger nicht unmittelbar sondern über ein Hydraulik- oder Pneumatiksystem, wobei der Antriebsmotor eine lineare Bewegung eines antriebsseitigen Hydraulik-/Pneumatikkolbens bewirkt und daraus eine Bewegung des mit dem abtriebsseitigen Hydraulik-/Pneumatikkolben verbundenen Präparatträgers erfolgt.

Es ist deshälb das Ziel der Erfindung, ein Mikrotom mit einem Handantrieb für die Schneidbewegung zu schaffen, bei dem die Bedienung wenig ermüdend ist und bei dem gleichzeitig die erzeugten Schnitte einfach abnehmbar sind.

Diese Ziel wird durch ein Mikrotom mit den Merkmalen des Anspruches 1 gelöst. Vorteilhafte Ausgestaltungen der Erfindung ergeben sich aus den Merkmalen der abhängigen Ansprüche.

Das erfindungsgemäße Mikrotom weist einen Präparatträger auf, der entlang einer ersten Linearführung beweglich ist. Außerdem weist das Mikrotom einen entlang einer im wesentlichen linearen Bewegungsbahn bewegbaren Handantrieb auf, wobei die Bewegungsbahn des Handantriebes im wesentlichen senkrecht zur Bewegungsrichtung des Präparatträgers steht. Desweiteren sind Mittel zur Umlenkung der Bewegung des Handantriebes in eine Bewegung in Richtung der Linearführung des Präparatträgers vorgesehen.

Durch die Umlenkung der Bewegungsbahnen zwischen Handantrieb und Präparathalter kann die Bewegung des Handantriebes im wesentlichen horizontal nach vorn und hinten des Mikrotoms (Schub- und Zugbewegung des Bedienenden) erfolgen, die unter ergonomischen Gesichtspunkten als besonders günstig angesehen wird, und in eine zur Bewegung des Handantriebes im wesentlichen senkrechte Bewegung des Präparatträgers umgesetzt werden. Die Schneidbewegung kann dadurch in im wesentlichen vertikaler Richtung erfolgen, so daß die erzeugten Schnitte von einer diagonal nach vorn unten geneigten Rückenfläche des Schneidmessers oder Messerträgers abgenommen oder abgeschlemmt werden können.

Durch die Erfindung entsteht ein Mikrotom, das die jeweils spezifischen Vorteile sowohl des Schlittenmikrotomes als auch des Rotationsmikrotomes vereinigt, ohne die spezifischen Nachteile jeder dieser Bauart aufzuweisen.

Die Mittel zur Umlenkung der Bewegung können bei einem einfachen Ausführungsbeispiel als über ein über mehrere Umlenkrollen geführter Riemenantrieb ausgebildet sein. Allerdings ermöglicht ein Riemenantrieb nur ein ganzzahliges Übersetzungsverhältnis zwischen der Bewegung des Handantriebes und der des Präparatträgers. Als Gewichtsausgleich sollte am Antriebsriemen des Riemenantriebes ein Kontergewicht vorgesehen sein, dessen Masse entsprechend dem Übersetzungsverhältnis und der Masse des Präparatträgers einschließlich dessen Führungsschlitten derart gewählt ist, daß beide Massen sich in jeder Stellung des Präparatträgers ausgleichen.

Alternativ dazu können die Mittel zur Umlenkung der Bewegungsrichtung als kreissegmentförmige Platte oder als Hebelarm ausgebildet sein. Je nach Verhältnis der beiden Armlängen des Hebelarmes oder je nach dem Verhältnis der Abstände der Anlenkpunkte vom Lagerpunkt der kreissegmentförmigen Platte können bei dieser Ausführung unterschiedliche, auch ungeradzahlige Übersetzungsverhältnisse zwischen der Bewegung des Handantriebes und der des Präparatträgers eingestellt werden. Ebenfalls beliebige, auch ungeradzahlige Übersetzungsverhältnisse ermöglicht auch der Einsatz eines hydraulischen Systems für die Umlenkung der Bewegungen.

Bei einem vorteilhaften Ausführungsbeispiel der Erfindung ist eine Einrichtung zur Detektion einer Bewegungsumkehr des Präparatträgers vorgesehen. Durch die Detektion der Bewegungsumkehr kann die Schaltung des Präparatvorschubes unabhängig von der Bahnlänge der Schneidbewegung erfolgen. Dadurch kann der Benutzer die Bahnlänge des Präparatträgers entsprechend der Dicke des gerade zu schneidenden Präparates selbst wählen und braucht nicht konstruktionsbedingte Mindestwege zu durchfahren, um die Zustellung oder den Rückzug auszulösen.

Die Detektion der Bewegungsumkehr ist besonders vorteilhaft in Verbindung mit einem motorischen Antrieb für die Präparatzustellung und mit einer elektronischen Steuerschaltung, die den Motor im Falle einer detektierten Bewegungsumkehr ansteuert.

Bei einem weiterhin vorteilhaften Ausführungsbeispiel ist an zwei einander gegenüberliegenden Seiten des Mikrotoms ein Handantrieb vorgesehen oder ein Handantrieb ansetzbar. Dadurch werden die ergonomischen Vorteile des erfindungsgemäßen Mikrotoms sowohl für Links- als auch für Rechtshänder voll erzielt.

Desweiteren sollte beim erfindungsgemäßen Mikrotom für die Präparatzustellung der Messerträger des Mikrotoms senkrecht zur Schneidbewegung des Präparathalters entlang linearer Führungsbahnen beweglich sein. Dadurch können die bei der Schneidbewegung zu beschleunigenden Massen minimal gehalten werden, da die Mechanik für die Präparatzustellung nicht zu den zu beschleunigenden Massen zählt.

Nachfolgend werden Einzelheiten der Erfindung anhand der in den Figuren dargestellten Ausführungsbeispiele näher erläutert. Im einzelenen zeigen:
- Fig. 1: Die Prinzipskizze eines ersten Ausführungsbeispiels der Erfindung mit einer kreissegmentförmigen Platte als Mittel für die Bewegungsumlenkung;
- Fig. 2: die Prinzipskizze einer vereinfachten Form der Ausführung nach Fig. 1;
- Fig. 3a: ein Mikrotom mit einem Riemenantrieb und einer Übersetzung 1:1 zwischen der Bewegung des Handantriebes und der Bewegung des Präparatträgers im Schnitt;
- Fig. 3b: eine Frontansicht des Mikrotoms in Figur 3a;
- Fig. 3c: eine Schnittdarstellung eines Mikrotoms mit einem Riemenantrieb für eine Untersetzung 2:1 zwischen der Bewegung des Handantriebes und der Bewegung des Präparatträgers;
- Fig. 4: die Schnittdarstellung eines Mikrotoms mit einer hydraulischen Übertragung der Bewegung des Handantriebes auf den Präparatträger und
- Fig. 5: ein Blockschaltbild bezüglich der Steuerung von Präparatzustellung und Rückzug.

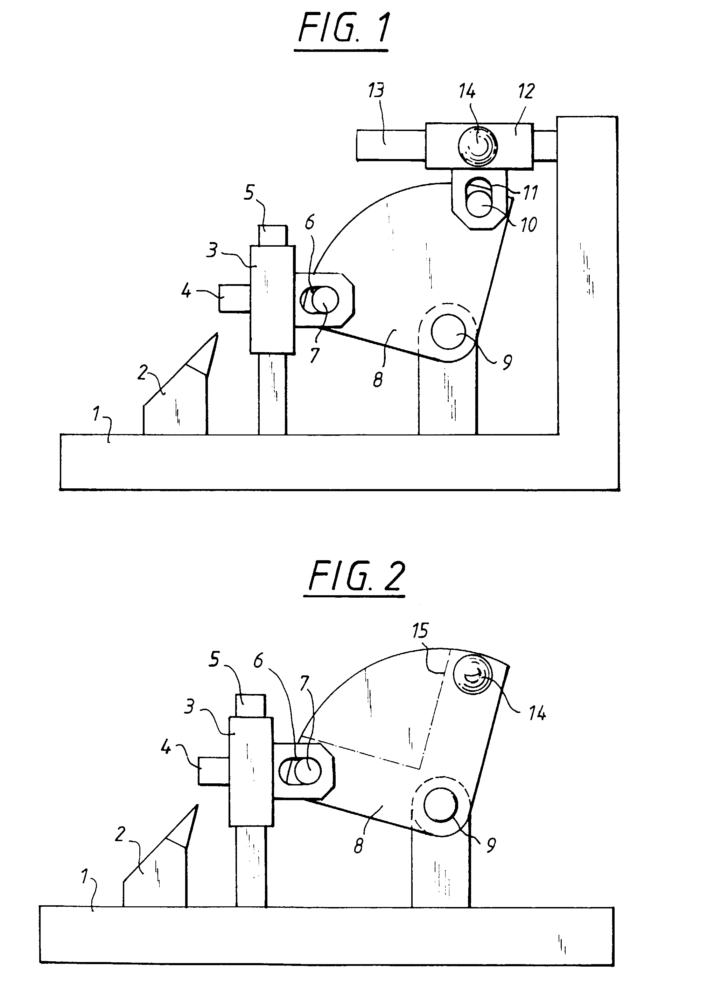

Die Ausführung gemäß Fig. 1 enthält eine Grundplatte (1), auf der im vorderen, dem Benutzer zugewandten Bereich der Messerträger (2) horizontal, das heißt in Richtung der Grundplatte (1) nach vorn und nach hinten, beweglich aufgenommen ist. Der Objektträger (3) mit einem Objekt (4) ist an einer senkrecht zur Grundplatte (1) orientierten Führung (5) vertikal beweglich aufgenommen. Der geführte Schlitten des Objektträgers (3) weist eine Nut (6) auf, in die ein Stift (7) einer kreissegmentförmigen Platte (8) eingreift. Die kreissegmentförmige Platte (8) ist um eine Drehachse (9) drehbar gelagert. Die Platte (8) weist einen vom ersten Stift (7) beabstandeten zweiten Stift (10) auf, der in die Nut (11) eines waagerecht geführten Schlittens (12) eingreift. Für die Führung des Schlittens (12) ist eine horizontale Führungsbahn (13) mit der Grundplatte (1) des Mikrotoms verbunden. Am Schlitten (12) ist ein Handgriff (14) für den manuellen Antrieb der Schneidbewegung vorgesehen.

Die kreissegmentförmige Platte (8) mit den beiden Stiften (7) und (10) bildet eine Einheit zur Übertragung und Umlenkung der horizontalen Bewegung des Handgriffes (14) in die im wesentlichen vertikale Bewegungsrichtung des Objektträgers (3). Der Schlitten (12), die Führung (13) und der Handgriff (14) bilden eine Handantriebseinrichtung.

Für die Bedienung des Mikrotoms in Fig. 1 verschiebt der Benutzer mit Hilfe des Handgriff (14) den Schlitten (12) entlang der horizontalen Führungen (13) auf sich zu. Bei dieser Bewegung des Schlittens (12) dreht der in die Nut (11) eingreifende Stift (10) gegen den Uhrzeigersinn die Platte (8) und den an der Platte (8) befestigten Stift (7), der in die Nut (6) des Objektträgers (3) eingreift. Dadurch wird der Objektträger (3) in Richtung auf das Schneidmesser des Mikrotom zu bewegt. Als Ergebnis dieser Bewegung erfolgt das Abschneiden einer Schicht der Probe (4). Bei der nachfolgenden Bewegung des Handgriffes (14) vom Benutzer weg nach hinten wird der Objektträger (3) wieder angehoben und der nicht dargestellte Vorschubantrieb des Messerträgers (3) führt eine horizontale Bewegung um eine vorgegebene Wegstrecke nach hinten, in Richtung auf den Objektträger (3) aus. Bei der nachfolgenden Bewegung des Handgriffes (14) wieder nach vorn erfolgt das Abschneiden einer weiteren Probenschicht.

Die Ausführungsform gemäß Fig. 2 ist eine vereinfachte Form der Ausführung nach Fig. 1. Die mit 1 bis 9 bezeichneten Bauelemente entsprechen denen aus Fig. 1 und werden deshalb an dieser Stelle nicht noch einmal beschrieben. Im Unterschied zur Ausführungsform nach Fig. 1 ist der Handgriff (14) direkt an der Stelle an der kreissegmentförmigen Platte (8) aufgenommen, an der im Ausführungsbeispiel nach Fig. 1 der Stift (10) vorgesehen ist. In dieser Ausführung dienen das Kreissegment (8) und dessen Drehachse (9) gleichzeitig als Teile der Handantriebseinrichtung und der Einrichtung zur Übertragung und Umlenkung der Bewegung vom Handgriff zum Objektträger (3). Bei dieser Ausführungsform ist die Bewegungsbahn des Handgriffes (14) nicht exakt linear sondern ein im wesentlichen horizontal verlaufender Ausschnitt einer Kreisbahn. Diese Abweichung ist jedoch für den Bedienenden kaum spürbar, wenn der Handgriff (14) hinreichend weit von der Drehachse (9) des Kreissegmentes (8) beabstandet ist und demzufolge der Radius der Kreisbahn mindestens um den Faktor 2 größer als die Bahnlänge entlang der Kreisbahn ist.

Anstelle einer kreissegmentförmigen Platte (8) kann die Umlenkung der Bewegungsrichtung vom Handtrieb (14) auf den Präparatträger (3) auch durch einen schwenkbar angelenkten Hebelarm realisiert sein. Ein solcher Hebelarm ergibt sich in einfacher Weise aus der kreissegmentförmigen Platte (8), indem diese entlang der in der Fig. 2 gestrichelt dargestellten und parallel zu den Verbindungsachsen zwischen dem Handgriff (4) und der Drehachse (9) und zwischen dem Stift (7) und der Drehachse (9) verlaufenden Linien geschnitten wird.

Das Unter- oder Übersetzungsverhältnis der Bewegungen des Präparatträgers und des Handantriebes ist je nach dem Verhältnis der beiden wirksamen Hebellängen beliebig realisierbar.

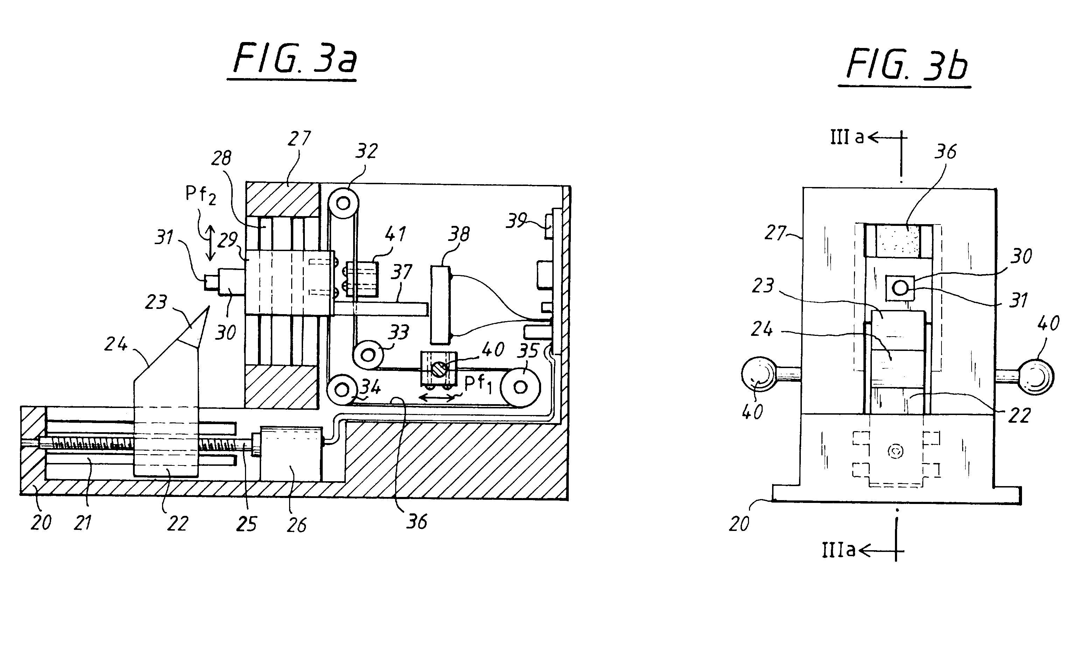

Im Ausführungsbeispiel nach Fig. 3a ist die Grundplatte des Mikrotoms mit (20) bezeichnet. In der Grundplatte (20) sind die sich entlang der Grundplatte (20) erstreckenden Führungsbahnen (21) für die Zustellbewegung des Messerträgers (22) vorgesehen. Am Messerträger (22) ist das Schneidmesser (23) aufgenommen. Für den Antrieb der Zustellbewegung ist ein Schrittmotor (26) mit einer parallel zu den Führungsbahnen (21) verlaufenden Gewindespindel (25) vorgesehen, die in ein entsprechendes Innengewinde im Messerträger (22) verschraubt ist.

An der Grundplatte (20) ist ein im wesentlichen senkrecht zur Grundplatte stehendes Portal (27) mit Führungsbahnen (28) fest angeordnet. In diesen Führungsbahnen (28), die senkrecht zu den Führungsbahnen (21) des Messerträgers (22) ausgerichtet sind, ist der Objektträgerschlitten (29) linear beweglich aufgenommen. Am Objektträgerschlitten (29) ist im vorderen Bereich der Objektträger (30) mit dem zu schneidenden Objekt (31) aufgenommen.

Auf der vom Objektträger (30) abgewandten Seite ist ein Antriebsriemen (36), beispielsweise ein breites Stahlband oder ein Keilriemen, der über insgesamt vier Umlenkrollen (32-35) geführt ist, mit dem Objektträgerschlitten (29) verschraubt. Von den vier Umlenkrollen (32-35) dienen zwei Umlenkrollen (32, 34) dazu, daß der Antriebsriemen (36) im vorderen Bereich parallel zu den Führungsbahnen (28) im Portal (27) geführt ist. Die beiden übrigen Umlenkrollen (33, 35) dienen dazu, daß der Antriebsriemen (36) im Bereich des Handgriffes (40) senkrecht zu den Führungsbahnen (28) im Portal (27) geführt ist. Dadurch resultiert bei einer horizontalen Bewegung des Handgriffes (40) in Richtung des Doppelpfeiles (Pf₁) eine vertikale Bewegung des Präparatträgerschlittens (29) in Richtung des Doppelpfeiles (Pf₂).

Durch die insgesamt vier Umlenkrollen (32-35) ist außerdem gewährleistet, daß die Schneidbewegung beim Zug des Handgriffes (40) auf den Benutzer zu erfolgt. Außerdem ist gewährleistet, daß der Handgriff (40) im unteren Teil des Mikrotoms in der Nähe der Grundplatte (20) angeordnet ist. Beides wird unter ergonomischen Gesichtspunkten als besonders günstig angesehen.

Durch die Verwendung von vier Umlenkrollen ist desweiteren gewährleistet, daß der Antriebsriemen (36) zwischen zwei weiteren Umlenkrollen (32, 33) annähernd vertikal verläuft, wobei in diesem Bereich die Bewegungsrichtung des Riemens (36) umgekehrt zur Bewegungsrichtung am Objektträgerschlitten (29) ist. Zwischen diesen beiden Umlenkrollen (32, 33) ist am Antriebsriemen (36) ein Ausgleichsgewicht (41) vorgesehen, dessen Masse der des Objektträgerschlittens (29) mit dem Objektträger (30) entspricht. Durch diesen Gewichtsausgleich bleibt der Präparatträgerschlitten an jeder eingestellten Position der Führungsbahn (28) stehen, so daß bei der Bewegungsumkehr mittels des Handgriffes (40) an jeder Stelle lediglich die erforderlichen Beschleunigungskräfte, jedoch keine zusätzlichen Gewichtskräfte, aufzubringen sind.

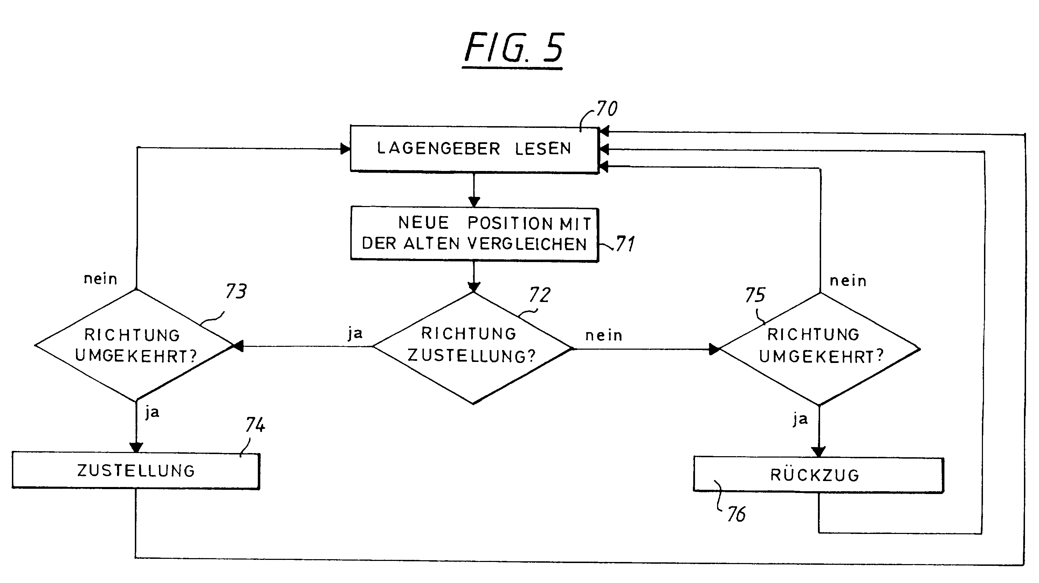

Auf der vom Objektträger (30) abgewandten Seite des Objektträgerschlittens (29) ist noch der Antriebsstift (37) eines Schiebepotentiometers (38) vorgesehen. Bei einer Bewegung des Objektträgerschlittens (29) ändert sich entsprechend der Widerstand des Potentiometers (38). Der Spannungsabfall am Potentiometer (38), oder genauer gesagt, die Änderung dieses Spannungsabfalls, dient zur Detektion der Bewegungsumkehr des Objektträgerschlittens (29) und zur entsprechenden Ansteuerung des Motors (26) für die Zustellbewegung. Die erforderliche Auswerteelektronik ist auf einer Platine (39) im Inneren des Mikrotoms vorgesehen und die dabei im einzelnen ablaufenden Schritte werden weiter unten an Hand der Fig. 5 näher erläutert.

In der Fig. 3b ist die Frontansicht des Mikrotoms aus Fig. 3a dargestellt. Wie man erkennt, ist auf zwei gegenüberliegenden Seiten des Mikrotoms jeweils ein Handgriff (40) für den Antrieb der Schneidbewegung des Objektträgerschlittens (29) vorgesehen. Dadurch weist das Mikrotom für Rechts- und Linkshänder dieselben ergonomischen Vorteile auf. Es ist natürlich auch möglich, an Stelle von zwei Handgriffen (40) nur einen einzigen Handgriff (40) vorzusehen, der wahlweise vom Benutzer an einer der beiden gegenüberliegenden Seiten des Mikrotoms angebracht werden kann.

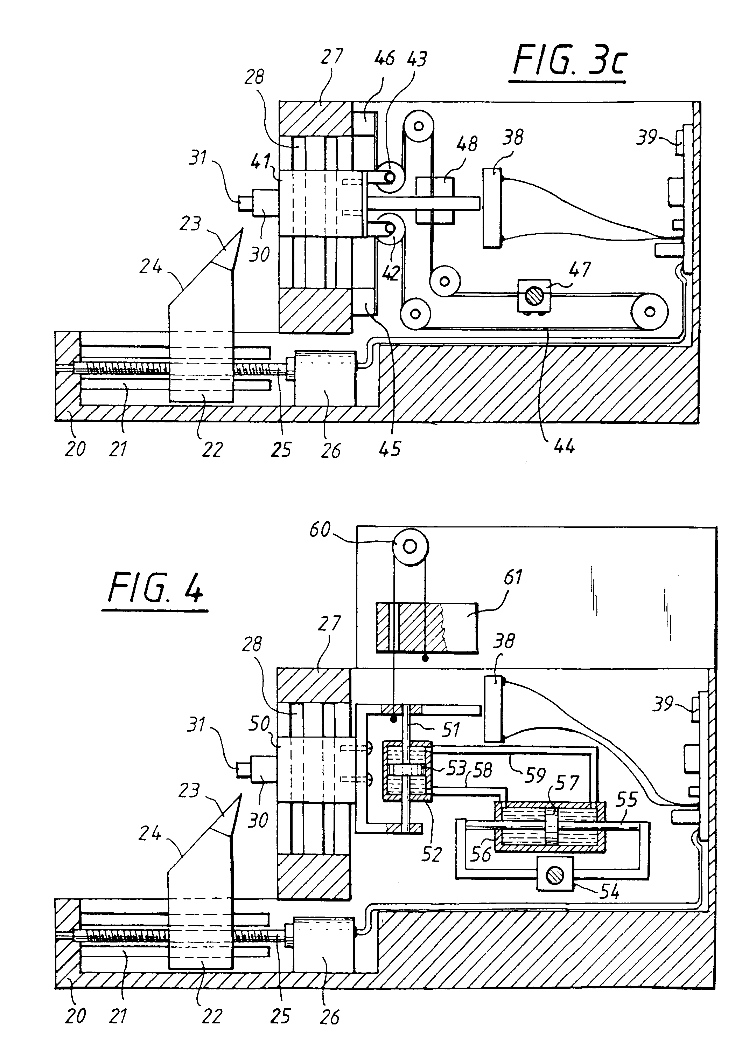

Beim Mikrotom in den Figuren 3a und 3b ist das Übersetzungsverhältnis zwischen der Bewegung des Handantriebes (40) und der des Objektträgerschlittens (29) 1:1. In diesem Fall ist das Antriebsband (36) als umlaufendes Endlosband ausgebildet. Im Gegensatz dazu weist der Objektträgerschlitten (41) beim Ausführungsbeispiel nach Fig. 3c selbst zwei drehbare Umlenkrollen (42, 43) auf, über die das Antriebsband (44) gelegt ist. Das Antriebsband ist in diesem Ausführungsbeispiel als endliches Band ausgebildet und verläuft mit seinen Enden parallel zu den Führungsbahnen des Objektträgerschlittens (41) und ist mit den Enden mittels Abstandshalter (45, 46) an dem die Führungsbahnen für den Objektträgerschlitten (41) aufweisenden Portal (27) des Mikrotomes befestigt. Bei dieser Ausführung ist die Bewegung des Handantriebes (47) im Verhältnis 2:1 zur Bewegung des Objektträgerschlittens (41) untersetzt, das heißt, der erforderliche Hub des Handantriebes (47) ist doppelt so groß wie der Hub des Objektträgerschlittens (41). Die Masse des Ausgleichsgewichtes (48) braucht nur die Hälfte der Masse des Objektträgerschlittens (41) mit dem daran aufgenommenen Objekthalter (30) zu betragen, wodurch die zu beschleunigenden Massen insgesamt reduziert sind.

Außerdem sind die für die Beschleunigung des Objektträgerschlittens (41) erforderlichen Kräfte aufgrund der Untersetzung im Verhältnis 2:1 nur halb so groß wie bei einer 1:1 Untersetzung, so daß die insgesamt aufzubringenden Beschleunigungskräfte weniger als die Hälfte als beim Ausführungsbeispiel nach Fig. 3a betragen. Die Detektion der Bewegungsumkehr des Objektträgerschlittens (41) und der entsprechende Antrieb des Motors für die Zustellung des Mikrotommessers erfolgt auf derselben Weise wie im Ausführungsbeispiel nach Fig. 3a und wird deswegen an dieser Stelle nicht noch einmal erläutert.

Im Ausführungsbeispiel nach Fig. 4 ist für den Antrieb der Schneidbewegung des Objekthalterschlittens (50) ein handgetriebenes Hydrauliksystem vorgesehen. Dazu ist der Handantriebknopf (54) über eine Stange (55) mit einem Verdränger (57) in einem ersten Hydraulikzylinder (56) verbunden. Über zwei Hydraulikleitungen (58, 59) ist dieser Hydraulikzylinder (56) an einen zweiten Hydraulikzylinder (52) angeschlossen, dessen Verdränger (53) über eine Stange (51) mit dem Objektträgerschlitten (50) starr verbunden ist. Bei einer Bewegung des Antriebknopfes (54) zur Vorderseite des Mikrotoms drückt der Verdränger (57) das Hydrauliköl im ersten Zylinder (56) durch die Leitung (58) in den zweiten Hydraulikzylinder (52) und drückt dessen Verdränger (53) nach oben, wodurch der Objektträgerschlitten (50) ebenfalls nach oben bewegt wird. Gleichzeitig drückt der Verdränger (53) das in der oberen Kammer des zweiten Hydraulikzylinders (52) überschüssige Hydrauliköl über die zweite Leitung (59) in die hintere Kammer des ersten Hydraulikzylinders (56). Bei einer umgekehrten Bewegung des Handgriffes (54) ergibt sich der entsprechend umgekehrte Funktionsablauf, wodurch der Objektträgerschlitten (50) für den Schnitt nach unten geführt wird. Dementsprechend erfolgt beim Ausführungsbeispiel nach Fig. 4 der Schnitt bei einer Schubbewegung des Handantriebes (54) im Gegensatz zu der Zugbewegung bei den Ausführungsbeispielen nach den Figuren 3a und 3c. Soll auch bei der hydraulischen Kraftübertragung der Objektträgerschlitten bei einer Zugbewegung, also einer Bewegung des Handgriffes (54) nach vorn, die Schneidbewegung nach unten ausführen, so brauchen lediglich die Anschlüsse der beiden Leitungen (58 und 59) gegeneinander vertauscht am zweiten Hydraulikzylinder (52) angeschlossen zu werden. Für den Gewichtsausgleich ist auch bei diesem Ausführungsbeispiel ein Kontergewicht (61) vorgesehen, daß mittels eines über eine Rolle (60) geführten Seiles am Objektträgerschlitten (50) befestigt ist.

Auch bei diesem Ausführungsbeispiel wird eine Bewegungsumkehr des Objektträgerschlittens (50) mittels eines Schiebepotentiometers (38) detektiert und bei einer detektierten Bewegungssumkehr der Schrittmotor (26) für den Antrieb der Zustellbewegung des Mikrotommessers angesteuert.

Die erzeugten Schnitte liegen bei den beschriebenen Ausführungsbeispielen auf der schräg nach unten vorn geneigten Rückenfläche (24) des Messerträgers im vorderen Bereich des Mikrotoms, wodurch die Schnitte leicht und bequem wie bei Rotationsmikrotomen abgenommen oder abgeschwemmt werden können.

In der Fig. 5 sind die in einem Steuerungsprozessor der Elektronikplatine (39) für die Detektion der Bewegungsumkehr des Objektträgerschlittens ablaufenden Funktionsschritte im Einzelnen dargestellt. In einem ersten Schritt (70) wird der Wert des Lagengebers, das heißt der momentan eingestellte Widerstand des Schiebepotentiometers (38), ausgelesen und zwischenzeitlich abgespeichert. In einem darauffolgenden Schritt (71) wird der momentane Widerstand mit dem abgespeicherten Widerstand der Vormessung verglichen, was beispielsweise durch Differenz- oder Quotientenbildung des aktuellen Wertes mit dem Vorwert erfolgen kann. In einem darauffolgenden Schritt (72) wird aufgrund des Vergleichswertes entschieden, ob eine Schneidbewegung (Objektträgerschlitten bewegt sich nach unten) oder eine Rückstellbewegung (Objektträgerschlitten bewegt sich nach oben) stattfindet. Dementsprechend wird entschieden, ob der Messerträger als nächstes eine Zustellbewegung oder eine Rückzugbewegung ausführen soll. Im Falle, daß eine Schneidbewegung ermittelt wird, wird in einem nachfolgenden Funktionsschritt (73) durch einen Vergleich der Bewegungsrichtung bei der vorherigen Messung in einem Funktionsschritt (73) entschieden, ob sich die Bewegungsrichtung umgekehrt hat. Ist diese Frage mit nein zu beantworten, so wird der Lagengeber erneut ausgelesen und die Routine auf's neue durchlaufen. Wurde dagegen die Umkehr der Bewegungsrichtung im Funktionsschritt (73) detektiert, so wird nachfolgend der Motor (26) derart angesteuert, daß sich der Messerträger (22) um eine Wegstrecke, die der Summe aus einer Rückzugstrecke und einer voreingestellten Schnittdicke entspricht, in Richtung auf das Portal (27) zu bewegt. Auch danach kehrt die Routine zum ersten Funktionsschritt (70) zurück, wodurch der Lagengeber erneut ausgelesen und die Routine erneut durchlaufen wird.

Im Falle, daß im Funktionsschritt (72) eine Rückstellbewegung detektiert wird, wird im nachfolgenden Funktionsschritt (75) durch einen Vergleich mit dem Richtungswert der vorherigen Messung ermittelt, ob eine Richtungsumkehr statt gefunden hat. Ist diese Frage mit nein zu beantworten, so wird zum Funktionsschritt (70) zurückgegangen und der Lagengeber erneut ausgelesen und die Routine erneut durchlaufen. Wird dagegen im Funktionsschritt (75) eine Umkehr der Bewegungsrichtung detektiert, das heißt, zwischen der aktuellen Messung und der Vormessung hat ein Wechsel von einer Schneidbewegung auf die Rückstellbewegung statt gefunden, so wird in einem darauffolgenden Funktionsschritt (76) der Schrittmotor (26) derart angesteuert, daß der Messerträger (22) um eine vordefinierte Rückzugsstrecke vom Portal (27) des Mikrotoms entfernt wird. Nachfolgend wird wiederum erneut zum Funktionsschritt (70) zurückgegangen und der Lagengeber erneut ausgelesen und die Routine erneut durchlaufen.

Um sicher zu stellen, daß nicht bereits jedes kleine Zittern am Handantrieb (40) bereits eine Zustell- oder Rückzugbewegung auslöst, wird in den Funktionsschritten (73 und 75) jeweils auch überprüft, ob mindestens ein voreingestellter Sicherheitsweg, der einen Wert zwischen 2 mm und 5 mm hat, in derselben Richtung durchfahren wurde. Andernfalls wird von der Routine in den Funktionsschritten (73 und 75) entschieden, daß keine Bewegungsumkehr stattgefunden hat.

Durch die Detektion der Bewegungsumkehr für die Auslösung der Zustellung oder des Rückzuges ist gewährleistet, daß diese Auslösung auch dann sicher erfolgt, wenn der Benutzer die Länge der Schneidbewegung und der Rückstellbewegung auf das durch das zu schneidende Objekt vorgegebene Minimum beschränkt. Insbesondere bei kleinen Proben kann der Benutzer aufgrund der Detektion der Bewegungsumkehr zusammen mit der linearen Bewegung des Handantriebes (40) sehr kurze Bewegungen ausführen, wodurch lange Leerwege der Schneid- und Rückstellbewegung vermieden werden. Dadurch läßt sich insbesondere bei kleinen Proben eine hohe Schnittfrequenz erzielen.

Bei den in den Figuren 3 a bis 3 c und 4 dargestellten Beispielen sind die Führungen von Objektträgerschlitten und Handantrieb exakt senkrecht zu einander. Eine solche Anordnung ist bei Geräten vorzusehen, die zum Aufsetzen auf eine waagerechte Unterlage bestimmt sind. Es ist jedoch auch möglich, das Mikrotom zum Aufsetzen auf eine geneigte Fläche, wie beispielsweise bei Kryostatmikrotomen, auszubilden, bei denen die Bewegung des Objektträgerschlittens um einen Winkel von bis zu 30° gegen die Vertikale geneigt ist. Bei solchen Ausführungsbeispielen sollte der Umlenkwinkel zwischen der Bewegung des Objektträgerschlittens und der des Handantriebes so gewählt sein, daß wiederum die Bewegung des Handantriebes in horizontaler Richtung erfolgt.

## Patentansprüche

1. Mikrotom mit einem Messerträger (2; 22) im vorderen, dem Benutzer zugewandten Bereich des Mikrotoms und einer schräg nach unten vorn geneigten Rückenfläche (24) des Messerträgers (2; 22), einer ersten Linearführung (5; 28) und einem entlang der ersten Linearführung (5; 28) für die Schneidbewegung beweglichen Präparatträger (3; 29, 30; 41; 50), einem entlang einer im wesentlichen linearen Bewegungsbahn bewegbaren, seitlich am Mikrotom angeordneten Handantrieb (14; 40; 47; 54) für die Schneidbewegung des Präparatträgers, wobei die Bewegungsbahn des Handantriebes (14; 40; 47; 54) im wesentlichen senkrecht zur Führungsrichtung der ersten Linearführung (5; 28) steht, und mit Mitteln (8; 36; 44) zur Umlenkung einer Bewegung des Handantriebes (14; 40; 44; 54) in eine Bewegung in Richtung der ersten Linearführung (3; 28), so daß aus einer Bewegung des Handantriebes (14; 40; 47; 54) eine Bewegung des Präparatträgers (3; 30) in Richtung der ersten Linearführung resultiert.

2. Mikrotom nach Anspruch 1, wobei eine Einrichtung (37, 38, 39) zur Detektion einer Bewegungsumkehr des Präparatträgers (3, 30) vorgesehen ist.

3. Mikrotom nach Anspruch 2, wobei ein Motor (26) für eine Präparatzustellung vorgesehen ist, und wobei eine elektronische Steuerschaltung (39) vorgesehen ist, die den Motor (26) im Falle einer detektierten Bewegungsumkehr ansteuert.

4. Mikrotom nach einem der Ansprüche 1-3, wobei an zwei gegenüberliegenden Seiten des Mikrotoms ein Handantrieb (40) vorgesehen bzw. ein Handantrieb (40) ansetzbar ist.

5. Mikrotom nach einem der Ansprüche 1-4, wobei die Mittel zur Umlenkung als kreissegmentförmige Platte (8) oder Hebelarm ausgebildet sind.

6. Mikrotom nach einem der Ansprüche 1-4, wobei die Mittel zur Umlenkung als über mehrere Umlenkrollen (32-35; 42, 43) geführter Riemenantrieb ausgebildet sind.

7. Mikrotom nach Anspruch 6, wobei am Antriebsriemen (36; 44) des Riemenantriebes ein Ausgleichsgewicht (41; 48) vorgesehen ist, dessen Masse der Masse des Präparathalters (30) einschließlich dessen Führungsschlitten (29; 41) multipliziert mit dem Untersetzungsverhältnis zwischen der Bewegung des Ausgleichsgewichts (41; 48) und der des Präparatträgerschlittens (29; 41) entspricht.

8. Mikrotom nach einem der Ansprüche 1-4, wobei die Mittel zur Umlenkung als hydraulisches System (51-53, 55-57) ausgebildet sind.

9. Mikrotom nach Anspruch 3, wobei zur Präparatzustellung der Messerträger (2; 22) senkrecht zur Bewegungsrichtung des Objektträgerschlittens (3, 29, 41, 50) entlang einer linearen Führungsbahn (21) beweglich ist.

10. Mikrotom nach einem der Ansprüche 1-9, wobei die Bewegungsbahn des Handantriebs (14; 40; 44; 54) horizontal ausgerichtet ist.

## Claims

1. Microtome with a knife carrier (2; 22) in the front region, directed to the user, of the microtome and a back face (24) of the knife carrier (2; 22) downwardly and forwardly inclined, a first linear guide (5; 28) and a sample carrier (3; 29, 30; 41; 50) movable in the direction ofthe first linear guide (5; 28) for the cutting movement, a hand drive (14; 40; 47; 54) movable in the direction of a substantially linear path for the cutting movement of the sample carrier, whereby the hand drive is arranged at a side of the microtome, and whereby the path of movement of the hand drive (14; 40; 47; 54) is substantially perpendicular to the guide direction of the first linear guide (5; 28) and with means for deflecting the movement ofthe hand drive (14; 40; 44; 54) in a movement in the direction ofthe first linear guide (3; 28) so that from the movement ofthe hand drive (14; 40; 47; 54) a movement of the sample carrier (3; 30) in the direction of the first linear guide results.

2. Microtome of claim 1, wherein a device (37, 38, 39) is provided for the detection of a reversal of motion of the sample carrier (3, 30).

3. Microtome of claim 2, wherein a motor (26) is provided for a sample feed and wherein an electronic control circuit (39) is provided which controls the motor (26) in the case of a detected reversal of motion.

4. Microtome of one of the claims 1 to 3, wherein a hand drive (40) is provided, or a hand drive (40) can be placed, at two opposite sides of the microtome.

5. Microtome of one of the claims 1 to 4, wherein the means for deflection is constructed as a plate (8) of circular segment shape or as a lever arm.

6. Microtome of one of the claims 1 to 4, wherein the means for deflection is construed as a belt drive which is guided by means of several deflecting rollers (32 to 35; 42, 43).

7. Microtome of claim 6, wherein a balance weight (41; 48) is provided on the driving belt (36; 44) of the belt drive and has a mass which corresponds to the mass of the sample carrier (30) including its guiding slide (29; 41) multiplied by the reduction ratio between the motion of the balance weight (41; 48) and that of the sample carrier (29; 41).

8. Microtome according to one of the claims 1 to 4, whereby the means for deflection are constructed as a hydraulic system (51 to 53, 55 to 57).

9. Microtome of claim 3, wherein for sample feed the knife carrier (2; 22) is movable perpendicularly to the direction of motion of the sample carrier (3, 29, 41, 50) along a linear guideway (21).

10. Microtome of one of the claims 1 to 9, wherein the path of motion of the hand drive (14; 40; 44; 54) is aligned horizontally.

## Revendications

1. Microtome doté d'un porte-couteau (2; 22) disposé dans la partie avant du microtome faisant face à l'utilisateur, le dos (24) dudit porte-couteau (2; 22) étant incliné en bas vers l'avant, d'un premier guidage linéaire (5; 28) et d'un porte-objet (3; 29; 30; 41; 50) mobile selon ledit premier guidage linéaire (5; 28) pour le mouvement de coupe, d'une commande manuelle (14; 40; 47; 54) disposée sur le côté du microtome et mobile selon un trajet sensiblement linéaire, destinée à assurer le mouvement de coupe du porte-objet, le sens du mouvement de la commande manuelle (14; 40; 47; 54) étant sensiblement perpendiculaire à l'orientation du premier guidage linéaire (5; 28), et de moyens (8; 36; 44) servant à transformer un mouvement de la commande manuelle (14; 40; 47; 54) en un mouvement dans le sens du premier guidage linéaire (3; 28), de manière à ce qu'il résulte d'un mouvement de la commande manuelle (14; 40; 47; 54) un mouvement du porte-objet (3; 30) dans le sens du premier guidage linéaire.

2. Microtome selon la revendication 1, où un dispositif (37, 38, 39) est prévu pour détecter une inversion du mouvement du porte-objet (3, 30).

3. Microtome selon la revendication 1, où un moteur (26) est prévu pour l'approche de la préparation et où un circuit de réglage électronique (39) est prévu qui actionne le moteur (26) en cas de détection d'une inversion du mouvement.

4. Microtome selon l'une des revendications 1-3, où une commande manuelle (40) est prévue ou adaptable sur deux côtés opposés du microtome.

5. Microtome selon l'une des revendications 1-4, où les moyens de transformation du mouvement sont constitués par une plaque en forme de segment de cercle (8) ou par un bras de levier.

6. Microtome selon l'une des revendications 1-4, où les moyens de transformation du mouvement sont constitués par une commande à courroie, la courroie étant guidée par plusieurs poulies de renvoi (32-35; 42, 43).

7. Microtome selon la revendication 6, où un poids de compensation (41; 48) est prévu sur la courroie (36; 44) de la commande à courroie, dont la masse correspond à la masse du porte-objet (30) et de son chariot de guidage (29; 41) multipliée par le rapport de réduction entre le mouvement dudit poids de compensation (41; 48) et celui du chariot de guidage du porte-objet (29; 41).

8. Microtome selon l'une des revendications 1-4, où les moyens de transformation du mouvement sont constitués par un système hydraulique (51-53, 55-57).

9. Microtome selon la revendication 3, où le porte-couteau (2; 22) est mobile perpendiculairement au sens de déplacement du chariot porte-objet (3, 29, 41, 50) et le long d'un guidage linéaire (21) en vue de l'approche de la préparation.

10. Microtome selon l'une des revendications 1-9, où le trajet de déplacement de la commande manuelle (14; 40; 44; 54) est orienté horizontalement.
